(19) **Europäisches Patentamt / European Patent Office / Office européen des brevets**

(11) **EP 1 241 133 B1**

(12) **EUROPÄISCHE PATENTSCHRIFT**

(45) Veröffentlichungstag und Bekanntmachung des Hinweises auf die Patenterteilung:
**23.11.2011 Patentblatt 2011/47**

(51) Int Cl.:
*C01B 33/18* (2006.01)  *C01B 33/193* (2006.01)
*C08K 3/36* (2006.01)  *C09C 1/30* (2006.01)

(21) Anmeldenummer: **02001654.9**

(22) Anmeldetag: **24.01.2002**

(54) **Inhomogene Kieselsäuren für Elastomerenmischungen**

Inhomogeneous silicas for elastomer mixtures

Silices inhomogènes pour mélange d'élastomères

(84) Benannte Vertragsstaaten:
**AT BE CH CY DE DK ES FI FR GB GR IE IT LI LU MC NL PT SE TR**

(30) Priorität: **16.03.2001 DE 10112652**

(43) Veröffentlichungstag der Anmeldung:
**18.09.2002 Patentblatt 2002/38**

(73) Patentinhaber: **Evonik Degussa GmbH**
**45128 Essen (DE)**

(72) Erfinder:
• **Uhrlandt, Stefan, Dr.**
**53859 Niederkassel (DE)**
• **Schmoll, Ralf, Dr.**
**53125 Bonn (DE)**

• **Blume, Anke, Dr.**
**53919 Weilerswist (DE)**
• **Luginsland, Detlef, Dr.**
**50968 Köln (DE)**

(56) Entgegenhaltungen:
**EP-A- 0 268 763  EP-A- 0 272 380**
**EP-A- 0 942 029**

• **PATENT ABSTRACTS OF JAPAN vol. 1996, no. 09, 30. September 1996 (1996-09-30) & JP 08 133720 A (NIPPON SILICA IND CO LTD), 28. Mai 1996 (1996-05-28)**
• **PATENT ABSTRACTS OF JAPAN vol. 018, no. 198 (C-1187), 7. April 1994 (1994-04-07) & JP 06 001605 A (SHIN ETSU CHEM CO LTD;OTHERS: 01), 11. Januar 1994 (1994-01-11)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft Kieselsäuren mit inhomogener Struktur bzw. Aufbau, Verfahren zu deren Herstellung und deren Verwendung.

Leicht dispergierbare Kieselsäuren werden z. B. gemäß EP 0 901 986 oder EP 0 647 591 durch Fällung von Wasserglas mit Schwefelsäure und anschließender Trocknung hergestellt. Die getrockneten Produkte werden anschliessend vermahlen und/oder granuliert.

Durch eine mechanische Granulation kann jede Kieselsäure staubfrei hergestellt werden, jedoch verschlechtert sich in der Regel durch diesen zusätzlichen Verfahrensschritt die Dispergierbarkeit.

In einem anderen Verfahren werden Kieselsäuren ebenfalls durch saure Fällung hergestellt, jedoch mittels Verdüsung in Heißluft getrocknet und gleichzeitig zu leicht zerstörbaren Kugeln geformt. So beschreibt EP 018 866 die Herstellung von sprühgetrockneter Kieselsäure mit einem mittleren Partikeldurchmesser von über 80 μm, wobei die Partikel eine homogene Struktur besitzen und massiv sind.

Sprühgetrocknete Kieselsäuren eignen sich besonders als Füllstoff, da sie sehr leicht dispergierbar sind. Die Dispergierbarkeit ist für die Verarbeitung der Kieselsäure ein wichtiges Kriterium, da eine homogene und schnelle Einarbeitung in die entsprechende Matrix eine hohe wirtschaftliche Bedeutung hat. Neben der Dispergierbarkeit sind die spezifischen Oberflächen (BET, CTAB) und die Ölaufnahmekapazität (DBP) wichtig.

Im Gegensatz zur mechanischen Granulation können nicht alle Kieselsäuren durch Sprühtrocknung staubfrei hergestellt werden.

Nun erfüllt ein Kieselsäuretyp in der Regel nicht alle geforderten Kriterien. EP 0272380 und EP 0268763 beschreiben Mischungen von Kieselsäuren und deren Herstellverfahren. Die Kieselsäuremischungen weisen Partikelgrößen < 40 um auf. Mischung aus mehreren Kieselsäuretypen ist aufgrund der bereits erwähnten leichten Dispergierbarkeit (d. h. geringe mechanische Stabilität) nur mit einem zu großen Staubanteil herzustellen.

Es wäre wünschenswert, eine Kieselsäure herzustellen, die gleichzeitig breite Bereiche von physikalisch-chemischen Daten wie BET-, oder CTAB-Oberfläche, und eine leichte Dispergierbarkeit abdeckt und einen geringen Staubanteil aufweist. Wie bereits ausgeführt, kann dies nicht für alle Kieselsäuren durch Sprühtrocknung oder Granulation erreicht werden.

Überraschenderweise wurde gefunden, dass Kieselsäure, die eine inhomogene Zusammensetzung aufweist, leicht auf die geforderten Anforderungen eingestellt werden kann und dennoch eine gute Dispergierbarkeit aufweist.

Gegenstand der vorliegenden Erfindung ist daher ein Verfahren zur Herstellung von inhomogenen Kieselsäuren, enthaltend mindestens zwei Kieselsäurefraktionen, die sich in mindestens einem Meßwert für BET-Oberfläche, CTAB-Oberfläche und DBP-Aufnahme um mindestens 10 % unterscheiden, die miteinander gemischt, filtriert, einem Verflüssigungsschritt unterworfen und auf einen Düsenturmtrockner versprüht werden, so dass die resultierenden inhomogenen Kieselsäuren einen Feinanteil von höchstens 10 % an Partikeln mit einem Teilchendurchmesser kleiner oder gleich 63 μm (Alpine Siebrückstand) aufweisen.

Die erfindungsgemäßen Kieselsäuren sind daher besonders als Füllstoff in Elastomerenmischungen wie Reifen geeignet.

Der Aufbau der Kieselsäuren aus mindestens zwei Kieselsäurefraktionen bewirkt eine Inhomogenität der Kieselsäure, die sich in einer besonders guten Dispergierbarkeit und einem geringen Feinanteil niederschlägt.

Erfindungsgemäße Kieselsäuren besitzen einen Feinanteil von höchstens 10 % mit Teilchendurchmesser kleiner oder gleich 63 μm (Alpine Siebrückstand).

Ein ähnliches Konzept wird in EP 0 942 029 verfolgt. Hier werden Gummi-Kompositionen beschrieben, die eine Fällungskieselsäure in zwei verschiedenen Aggregatgrößen enthält. Die verschiedenen Aggregatgrößen werden für die leichte Dispergierbarkeit der Kieselsäure in der Gummimischung eingesetzt.

Die unterschiedlichen Kieselsäurefraktionen der vorliegenden Erfindung sind nicht beschrieben; außerdem ist eine unterschiedliche Aggregatgröße der Kieselsäurefraktionen im vorliegenden Fall von nebengeordneter Bedeutung, wichtig sind die Unterschiede der physikalischchemischen Daten.

"Kieselsäurefraktion" im Sinne der vorliegenden Erfindung bezeichnet verschiedene Sorten von Kieselsäuren, die aufgrund verschiedener Herstellungsverfahren oder -Varianten einen Unterschied von mindestens 10 % in mindestens einer der o. g. physikalisch-chemischen Daten aufweisen. Bevorzugt weisen zwei, besonders bevorzugt drei dieser Parameter einen solchen Unterschied auf.

Die Unterschiede in den bereits genannten Parametern können durch unterschiedliche Herstellverfahren der Kieselsäurefraktionen erhalten werden. So können alle, ein oder mehrere der Kieselsäurefraktionen Fällungskieselsäuren und/oder pyrogene Kieselsäuren sein. Bei Fällungskieselsäuren ist es vor allem möglich, durch verschiedene Fällungsverfahren verschiedene Kieselsäurefraktionen zu erhalten. Erfindungsgemäße Kieselsäuren können auch aus Fraktionen von gefällten und pyrogenen Kieselsäuren hergestellt werden.

Für Fällungskieselsäuren sind verschiedene Fällmethoden bekannt und können z. B. in EP 0 901 986, EP 0 937 755, EP 0 643 015 oder EP 0 647 591 nachgelesen werden. In den Beispielen sind exemplarisch zwei Fällungskieselsäuren aus verschiedenen Herstellverfahren zur erfindungsgemäßen inhomogenen Kieselsäure verarbeitet worden. Es ist auch möglich, hydrophobierte Kieselsäurefraktionen mit nicht behandelten Kieselsäurefraktionen zur erfindungsgemäßen Kieselsäure zu kombinieren.

Die Kieselsäurefraktionen können Fällungskieselsäuren oder pyrogene Kieselsäuren sein, wobei eine Mischung der Fraktionen an verschiedenen Prozeßschritten, die üblicherweise bei der Herstellung von Kieselsäuren durchgeführt werden, erfolgen kann.

Bei Verwendung von Fraktionen aus Fällungskieselsäuren kann die Mischung nach der Fällung von Silikat mit einer Säure (in der Regel Wasserglas, d. h. Natriumsilikat mit Schwefelsäure) durch Vermischen der Fällungssuspensionen oder der nach Filtration der Suspensionen erhaltenen Filterkuchen sowie resuspendierten Filterkuchen erfolgen. Es ist auch möglich, bereits hergestellte, getrocknete oder hydrophobierte Kieselsäurefraktionen als Feststoff den Suspensionen oder den Filterkuchen zuzusetzen.

Die so erhaltenen Mischungen müssen ggf. abfiltriert und in üblicher Weise getrocknet werden. Trocknungsverfahren sind z. B. Sprühtrocknung, Düsenturm, Etagentrockner, Drehrohrtrockner oder Spin-Flash-Trockner.

Nach dem Trocknen ist eine abschließende Vermahlung und/oder Granulation möglich.

Es ist auch möglich, die Kieselsäurefraktionen im trockenen Zustand zu vermischen. Hierzu kann sich eine Resuspendierung mit den o. g. Trocknungsschritten anschließen und/oder eine Vermahlung/Granulation.

Erfindungsgemäße Kieselsäuren können die folgenden physikalisch-chemischen Daten aufweisen:

| | |
|---|---|
| BET-Oberfläche | $80 - 300 \, m^2/g$, insbesondere $80 - 230 \, m^2/g$ |
| CTAB-Oberfläche | $80 - 300 \, m^2/g$, insbesondere $80 - 230 \, m^2/g$ |
| DBP-Aufnahme | $150 - 350 \, g/100 \, g$. |

Diese physikalisch-chemischen Daten betreffen die Kieselsäure gemäß der Erfindung <u>als solche,</u> und nicht die Kieselsäurefraktionen.

Die physikalisch-chemischen Daten der Kieselsäurefraktionen müssen sich in beschriebener Weise um mindestens 10, bevorzugt um mindestens 15, besonders bevorzugt um mindestens 20 % unterscheiden.

Die physikalisch-chemischen Daten werden mit folgenden Methoden bestimmt:

| | |
|---|---|
| BET-Oberfläche | Areameter, Fa. Ströhlein, gemäß ISO 5794/Annex D |
| CTAB-Oberfläche | bei pH 9, gemäß Jay, Janzen und Kraus in "Rubber Chemistry and Technology" 44 (1971) 1287 |
| DBP-Zahl | ASTM D 2414-88 |

Ein weiterer Gegenstand der Erfindung sind Kieselsäuren, enthaltend mindestens zwei Kieselsäurefraktionen, wobei mindestens zwei Kieselsäurefraktionen, die sich in mindestens einem Meßwert für BET-Oberfläche, CTAB-Oberfläche und DBP-Aufnahme um mindestens 10 % unterscheiden, die nach dem erfindungsgemäßen Verfahren hergestellt werden.

Der Anteil der jeweiligen Fraktionen in der Suspension bzw. an der Kieselsäure sollte jeweils zwischen 5 und 95 Gew.-%, bezogen auf die trockene Kieselsäure, betragen.

Die Kieselsäure wird bevorzugt in Partikelform mit einem mittleren Durchmesser von über 80, insbesondere über 100, besonders bevorzugt über 200 $\mu m$, z. B. durch die Sprühtrocknung erhalten. Die Sprühtrocknung der Suspension kann z. B. gemäß US 4 097 771 durchgeführt werden.

Die erfindungsgemäßen Kieselsäuren können daher als Füllstoffe in Elastomerenmischungen, insbesondere für Reifen verwendet werden.

Weiterhin können die erfindungsgemäßen Kieselsäuren in allen Anwendungsgebieten verwendet werden, in denen üblicherweise Kieselsäuren eingesetzt werden, wie z. B. in Batterieseparatoren, Anti-Blocking-Mittel, Mattierungsmittel in Lacken, Papierstrichen oder Entschäumer.

Ein weiterer Gegenstand der Erfindung sind Elastomerenmischungen wie Reifen, die die erfindungsgemäße Kieselsäure enthalten.

Die erfindungsgemäße Kieselsäure oder die Kieselsäurefraktionen können mit Silanen hydrophobiert und insbesondere mit Organosilanen der Formeln I bis III modifiziert werden

$$[R^1{}_n\text{-}(RO)_{3-n}Si\text{-}(Alk)_m\text{-}(Ar)_p]_q[B] \qquad (I),$$

$$R^1{}_n\text{-}(RO)_{3-n}Si\text{-}(Alkyl) \qquad (II),$$

oder

$$R^1{}_n(RO)_{3-n}Si\text{-(Alkenyl)} \qquad \text{(III),}$$

in denen bedeuten

B: -SCN, -SH, -Cl, -NH$_2$ (wenn q = 1) oder -Sx- (wenn q = 2),

R und R$^1$: eine Alkylgruppe mit 1 bis 4 Kohlenstoffatomen, den Phenylrest, wobei alle Reste R und R$^1$ jeweils die gleiche oder eine verschiedene Bedeutung haben können.

R: eine C$_1$-C$_4$-Alkyl, -C$_1$-C$_4$-Alkoxygruppe,

n: 0; 1 oder 2,

Alk: einen zweiwertigen unverzweigten oder verzweigten Kohlenwasserstoffrest mit 1 bis 6 Kohlenstoffatomen,

m: 0 oder 1,

Ar: einen Arylenrest mit 6 bis 12 C-Atomen, bevorzugt 6 C-Atome,

p: 0 oder 1 mit der Maßgabe, dass p und n nicht gleichzeitig 0 bedeuten,

x: eine Zahl von 2 bis 8,

Alkyl: einen einwertigen unverzweigten oder verzweigten ungesättigten Kohlenwasserstoffrest mit 1 bis 20 Kohlenstoffatomen, bevorzugt 2 bis 8 Kohlenstoffatomen,

Alkenyl: einen einwertigen unverzweigten oder verzweigten ungesättigten Kohlenwasserstoffrest mit 2 bis 20 Kohlenstoffatomen, bevorzugt 2 bis 8 Kohlenstoffatomen.

Die Modifizierung mit Organosilanen kann in Mischungen von 0,5 bis 50 Teilen, bezogen auf 100 Teile Kieselsäure bzw. Kieselsäurefraktion, insbesondere 2 bis 15 Teile, bezogen auf 100 Teile Kieselsäure oder Kieselsäurefraktion durchgeführt werden, wobei die Reaktion zwischen Kieselsäure oder Kieselsäurefraktion und Silan während der Mischungsherstellung (in situ) oder außerhalb (vormodifiziert) durchgeführt werden kann.

In einer bevorzugten Ausführungsform der Erfindung kann als Silan das Bis(triethoxysilylpropyl)-tetrasulfan eingesetzt werden.

Die erfindungsgemäße Kieselsäure kann in Elastomerenmischungen oder vulkanisierbaren Kautschukmischungen als Verstärkerfüllstoff in Mengen von 5 bis 200 Teilen, bezogen auf 100 Teile Kautschuk als Pulver, Mikroperlen oder Granulat sowohl mit Silanmodifizierung als auch ohne Silanmodifizierung eingemischt werden.

Die Zugabe eines oder mehrerer der oben genannten Silane kann zusammen mit den erfindungsgemäßen Kieselsäuren zum Elastomeren erfolgen, wobei die Reaktion zwischen Füllstoff und Silan während des Mischprozesses bei erhöhten Temperaturen abläuft (in-situ-Modifizierung) oder in bereits vormodifizierter Form (zum Beispiel DE-PS 40 04 781), das heißt, beide Reaktionspartner werden außerhalb der eigentlichen Mischungsherstellung zur Reaktion gebracht.

Neben Mischungen, die ausschließlich die erfindungsgemäßen Kieselsäuren, mit und ohne Organosilane gemäß Formeln I bis III als Füllstoffe enthalten, können die Elastomeren zusätzlich mit einem oder mehreren mehr oder weniger verstärkenden Füllstoffen gefüllt sein. In erster Linie gebräuchlich wäre hier ein Verschnitt zwischen Rußen (zum Beispiel Furnace-, Gas-, Flamm-, Acetylenruße) und den erfindungsgemäßen Kieselsäuren, mit und ohne Silan, aber auch zwischen Naturfüllstoffen, wie zum Beispiel Clays, Kieselkreide, weiteren kommerziellen Kieselsäuren und den erfindungsgemäßen Kieselsäuren.

Das Verschnittverhältnis richtet sich auch hier, wie bei der Dosierung der Organosilane, nach dem zu erzielenden Eigenschaftsbild der fertigen Gummimischung. Ein Verhältnis von 5 - 95 % zwischen den erfindungsgemäßen Kieselsäuren und den anderen oben genannten Füllstoffen ist denkbar und wird in diesem Rahmen auch realisiert.

Neben den erfindungsgemäßen Kieselsäuren, den Organosilanen und anderen Füllstoffen bilden die Elastomere einen weiteren wichtigen Bestandteil der Kautschukmischung. Die erfindungsgemäßen Kieselsäuren können in allen mit Beschleuniger/Schwefel, aber auch peroxidisch vernetzbaren Kautschukarten, eingesetzt werden. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Butadienkautschuke, Isoprenkautschuke, Butadien-Styrol-Kautschuke, insbesondere SBR, hergestellt mittels des Lösungspolymerisationsverfahrens, Butadien-Acrylnitrilkautschuke, Butylkautschuke, Terpolymere aus Ethylen, Propylen und nicht konjugierte Diene. Ferner kommen für Kautschukgemische mit den genannten Kautschuken die folgenden zusätzlichen Kautschuke in Frage:

Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke.

Ebenso bekannt sind die üblichen weiteren Bestandteile wie Weichmacher, Stabilisatoren, Aktivatoren, Pigmente, Alterungsschutzmittel und Verarbeitungshilfsmittel in den üblichen Dosierungen.

Die erfindungsgemäßen Kieselsäuren, mit und ohne Silan, finden Einsatz in allen Gummianwendungen, wie zum Beispiel Reifen, Fördergurte, Dichtungen, Keilriemen, Schläuche, Schuhsohlen etc.

Ein weiterer Gegenstand der Erfindung sind Elastomerenmischungen, insbesondere vulkanisierbare Kautschukmischungen, die die erfindungsgemäßen Kieselsäuren in Mengen von 5 bis 200 Teilen, bezogen auch 100 Teile Elastomer bzw. Kautschuk enthalten. Die Einarbeitung dieser Kieselsäure und die Herstellung der dieses Kieselsäure enthaltenden Mischungen erfolgt in der in der Gummiindustrie üblichen Art und Weise auf einem Innenmischer oder Walzwerk. Die Darreichungs- bzw. Einsatzform kann sowohl als Pulver, Mikroperlen oder Granulat erfolgen. Auch hier unterscheiden sich die erfindungsgemäßen Kieselsäuren nicht von den bekannten hellen Silikatfüllstoffen.

Durchführung der Bestimmung des Alpine-Siebrückstands:

Zur Bestimmung des Siebrückstandes wird die Kieselsäure- oder Silikat-Probe durch ein 500 μm Sieb abgesiebt, um eventuell vorhandene Entlüftungsagglomerate zu zerstören. Dann werden 10 g der gesiebten Probe auf das Luftstrahlsieb gegeben, das mit einem 63 μm Siebgewebe bestückt ist und bei 200 mm Wassersäule-Unterdruck abgesiebt. Kieselsäure- oder Silikatpartikel, die sich am Siebdeckel des Gerätes absetzen, werden durch vorsichtiges Schlagen auf den Knopf des Siebdeckels abgeklopft. Der Siebvorgang dauert im allgemeinen 5 Minuten. Er ist beendet, wenn der Rückstand konstant bleibt, was meistens am rieselfähigen Aussehen zu erkennen ist. Zur Sicherheit siebt man dann noch eine weitere Minute.

Bei Agglomeraten, die sich eventuell bilden, wird der Siebvorgang kurz unterbrochen und die Agglomerate mit einem Pinsel unter leichtem Druck zerstört. Nach der Siebung wird der Siebrückstand vorsichtig vom Luftstrahlsieb geklopft und zurückgewogen. Der Siebrückstand wird in Prozenten angegeben, immer in Verbindung mit der Maschenweite des Siebes.

Berechnung:

$$\% \text{ Siebrückstand} = \frac{A \cdot 100}{E}$$

A = Auswaage in g
E = Einwaage in g

Geräte

Alpine Luftstrahlsieb, Labortyp S 200
Staubsauger oder Gebläse
Luftstrahlsieb mit Siebgewebe 63 μm nach DIN 4188
Präzisionswaage

Die folgenden Beispiele sollen die Erfindung näher erläutern, ohne ihren Umfang zu beschränken.

Es wurden zwei Kieselsäurefraktionen A gemäß EP 0 901 986 und B gemäß GB 1 043 282 hergestellt und die aus den Fällungen erhaltenen Suspensionen in der im folgenden beschriebenen Weise weiter umgesetzt.

**Beispiel 1**

Die Fällsuspensionen der Kieselsäurefraktionen A und B wurden im Verhältnis 50:50 gemischt. Dazu wurde 1 m³ der Fällungskieselsäure A (Feststoffgehalt ca. 85 g/l) mit 1,3 m³ der Fällungskieselsäure B (Feststoffgehalt ca. 63 g/l) in einem gerührten Behälter gemischt. Die erhaltenen Mischung wurde filtriert, der Filterkuchen mit etwas Säure verflüssigt und auf einem Düsenturmtrockner versprüht. Die Analysendaten sind in Tabelle 1 zusammengefaßt.

**Beispiel 2**

Die Fällsuspensionen der Fällungskieselsäuren A und B wurden im Verhältnis 70:30 gemischt. Dazu wurde 1,4 m³ der Fällungskieselsäure A (Feststoffgehalt ca. 83 g/l) mit 0,8 m³ der Fällungskieselsäure B (Feststoffgehalt ca. 64 g/l) in einem gerührten Behälter gemischt. Die erhaltenen Mischung wurde filtriert, der Filterkuchen mit etwas Säure verflüssigt und auf einem Düsenturmtrockner versprüht. Die Analysendaten sind in Tabelle 1 zusammengefaßt.

**Beispiel 3**

Die Fällsuspensionen der Fällungskieselsäuren A und B wurden im Verhältnis 30:70 gemischt. Dazu wurde 0,6 m³ der Fällungskieselsäure A (Feststoffgehalt ca. 82 g/l) mit 1,9 m³ der Fällungskieselsäure B (Feststoffgehalt ca. 63 g/l) in einem gerührten Behälter gemischt. Die erhaltenen Mischung wurde filtriert, der Filterkuchen mit etwas Säure verflüssigt und auf einem Düsenturmtrockner versprüht. Die Analysendaten sind in Tabelle 1 zusammengefaßt.

**Tabelle 1:**

| Vergleich der Analysendaten aus den Beispielen 1-3 und der Kieselsäurefraktionen A und B: | | | | | | |
|---|---|---|---|---|---|---|
| | Kieselsäure-fraktion A | Kieselsäure-fraktion B | Unterschied der Fraktionen A : B in % | Beispiel 1 | Beispiel 2 | Beispiel 3 |
| Wassergehalt | 5,0 | 5,0 | 0 | 4,9 | 4,5 | 4,9 |
| pH | 5,5 | 6,0 | 2,3 | 5,5 | 5,3 | 5,0 |
| BET m²/g | 170 | 190 | 10,5 | 171 | 167 | 180 |
| CTAB m²/g | 160 | 175 | 8,5 | 169 | 164 | 171 |
| DBP ml/100 g | 300 | 230 | 30 | 261 | 258 | 260 |
| Alpine Sieb-rückstand 63 μm | * | 99 | - | 98 | 97 | 99 |
| Alpine Siebrückstand 180 μm | * | 94 | - | 79 | 77 | 90 |
| *= nicht bestimmt, da keine stabilen Perlen, nur Pulver | | | | | | |

Die Kieselsäurefraktionen A und B unterscheiden sich in der DBP-Aufnahme um 30 % und der BET-Oberfläche um mehr als 10 %.
In den folgenden Beispielen wurden zwei Kieselsäurefraktionen (gemäß EP 0 983 966) und B (gemäß Beispiel 4) hergestellt und die so erhaltenen Suspensionen erfindungsgemäß gemischt.

**Beispiel 4**

Es wird eine Fällung durch Wasservorlage von 117 m³, eine Wasserglasvorlage von 2,7 m³, einen Wasserglasverbrauch der Stufe I von 12,9 m³ in 75 Minuten, mit einem Schwefelsäureverbrauch der Stufe I von 1906,2 1 in 75 Minuten durchgeführt. Die Rücksäuerung I erfolgt mit Schwefelsäure in ca. 30 Minuten auf einen pH-Wert von ca 8,5. Es erfolgt eine Unterbrechung von 30 Minuten. Danach erfolgt eine weitere Rücksäuerung II mit Schwefelsäure in ca. 30 Minuten auf einen pH-Wert von 4,4. Die Fällungstemperatur beträgt 88 °C. Die Säure und das Wasserglas werden in der üblichen konzentrierten Form eingesetzt.

**Beispiel 5**

Die Fällsuspensionen der Kieselsäurefraktionen A und B wurden im Verhältnis 50:50 gemischt. Der Feststoffgehalt beider Fällsuspensionen betrug vor dem Mischen ca. 90 g/l. Die Kieselsäurefraktionen A und B wurden in einem gerührten Behälter gemischt. Die resultierende Mischung hatte einen Feststoffgehalt von ca. 81 g/l. Die erhaltenen Mischung wurde filtriert, der Filterkuchen mit etwas Säure verflüssigt und auf einem Düsenturmtrockner versprüht. Die Analysendaten sind in Tabelle 2 zusammengefaßt.

**Vergleichsbeispiel I**

Die Pulver der getrockneten Kieselsäurefraktionen A und B wurden im Verhältnis 50 : 50 in einem Mischer gemischt und anschließend granuliert um staubfreie Kieselsäure zu erhalten. Die Analysendaten sind in Tabelle 2 zusammengefaßt.

**Tabelle 2:** Vergleich der Analysendaten aus Beispiel 5 und Vergleichsbeispiel I sowie der Kieselsäurefraktionen A und B

| | Kieselsäure-fraktion A | Kieselsäure-fraktion B | Unterschied der Fraktionen in % | Beispiel 5 | Vergleichs beispiel I |
|---|---|---|---|---|---|
| Wassergehalt | 5,5 | 5,5 | | 4,9 | 4,9 |
| pH | 5,5 | 6,0 | | 5,8 | 7,1 |
| BET m$^2$/g | 120 | 125 | 4 | 125 | 132 |
| CTAB m$^2$/g | 120 | 120 | 0 | 123 | 121 |
| DBP ml/100 g (wasserfrei) | 252 | 225 | 12 | 268 | 199 |
| Die Fraktionen unterscheiden sich in der DBP-Aufnahme um mehr als 10 %. | | | | | |

| | |
|---|---|
| X 50 S | 50:50 Verschnitt aus Si 69 (Bis(3-triethoxysilylpropyl)tetrasulfan |
| ZnO RS | Zinkoxid |
| Stearinsäure | |
| Lipoxol 4000 | Polyethylenglykol |
| Vulkanox 4020 | N-(1, 3-Dimethylbutyl)-N'-phenyl-p-phenylendiamin |
| DPG | Diphenylguanidin |
| CBS Schwefel | N-Cyclohexyl-2-benzthiazylsulfenamid |

Es wurden erfindungsgemäße Fällungskieselsäure nach den Beispielen 5 und 6 und den Standard-Kieselsäuren Ultrasil VN3 GR und VN3 GR (Degussa AG) in einer reinen E-SBR-Mischung (Angaben in phr) eingesetzt:

| Beispiel | 7 | 8 | 9 | 10 |
|---|---|---|---|---|
| | Kieselsäure aus Beispiel 6 | Kieselsäure aus Beispiel 5 | VN 2 | VN 3 |
| Krynol 1712 | 137,5 | 137,5 | 137,5 | 137,5 |
| Menge KS | 50 | 50 | 50 | 50 |
| X 50 S | 3 | 3 | 3 | 3 |
| ZnO RS | 3 | 3 | 3 | 3 |
| Stearinsäure | 1 | 1 | 1 | 1 |
| Vulkanox 4020 | 2 | 2 | 2 | 2 |
| Lipoxol 4000 | 1,5 | 1,5 | 1,5 | 1,5 |
| DPG | 1,5 | 1,5 | 1,5 | 1,5 |
| CBS | 1,5 | 1,5 | 1,5 | 1,5 |
| Schwefel | 2,2 | 2,2 | 2,2 | 2,2 |
| Mooney-Viskosität ML (1+4), 1. Stufe | 75 | 71 | 68 | 99 |
| Mooney-Viskosität ML (1+4), 2. Stufe | 60 | 58 | 56 | 76 |
| $t_{95}$ [%] | 14,1 | 14,1 | 17,5 | 18,8 |
| Zugfestigkeit [MPa] | 9,2 | 10,8 | 9,4 | 9,5 |
| Modul 300 % [MPa] | 4,9 | 5,3 | Nicht bestimmbar | 4,3 |
| Verstärkungsindex 300% / 100% | 4,1 | 4,4 | Nicht bestimmbar | 3,6 |
| Bruchdehnung [%] | 440 | 470 | 290 | 510 |
| Shore Härte | 52 | 51 | 59 | 54 |

(fortgesetzt)

| Beispiel | 7 | 8 | 9 | 10 |
|---|---|---|---|---|
| | Kieselsäure aus Beispiel 6 | Kieselsäure aus Beispiel 5 | VN 2 | VN 3 |
| E* 60 °C | 5,1 | 5,2 | 6,6 | 5,8 |
| tanδ 60°C | 0,099 | 0,096 | 0,087 | 0,106 |
| E* 0 °C | 7,6 | 7,8 | 10,6 | 8,8 |
| tanδ 0°C | 0,266 | 0,263 | 0,284 | 0,260 |
| Dispersion, Peakfläche Topographie | 12,6 | 1,9 | 6,4 | 25,7 |
| Dispersion, Anzahl Peaks 2-5 μm | 129 | 27 | 89 | 602 |

Die erfindungsgemäße Kieselsäure gemäß Beispiel 5 führt gegenüber der in der Oberfläche ähnlichen Kieselsäure des Beispiels 6 zu niedrigeren Mischungsviskositäten (was einer Verbesserung in der Mischungsherstellung darstellt), zu höheren Zugfestigkeiten, zu einem höheren Modulwert, zu einem höheren Verstärkungsindex, höherer Bruchdehnung und einer deutlich verbesserten Dispersion (was einem besseren Abriebverhalten entspricht). Beide Kieselsäuren weisen gegenüber den Standard-Kieselsäuren Ultrasil VN3 GR und VN3 GR eine stark verbesserte Dispersion und einen besseren Verstärkungsindex auf

Die Dispersion wurde gemäß A. Wehmeier "Charakterisierung der Füllstoffdispersion" mittels einer Oberflächentopographie, DKG Tagung, Bad Neuenahr, 30.09.1999, ermittelt.

**Patentansprüche**

1. Verfahren zur Herstellung von inhomogenen Kieselsäuren,
   **dadurch gekennzeichnet,**
   **dass** mindestens zwei Kieselsäurefraktionen, die sich in mindestens einem Meßwert für BET-Oberfläche, CTAB-Oberfläche und DBP-Aufnahme um mindestens 10 % unterscheiden, gemischt, filtriert, einem Verflüssigungsschritt unterworfen und auf einem Düsenturmtrockner versprüht werden, so dass die resultierenden inhomogenen Kieselsäuren einen Feinanteil von höchstens 10 % an Partikeln mit einem Teilchendurchmesser kleiner oder gleich 63 μm (Alpine Siebrückstand) aufweisen.

2. Verfahren zur Herstellung von inhomogenen Kieselsäuren nach Anspruch 1,
   **dadurch gekennzeichnet,**
   **dass** mindestens zwei Kieselsäurefraktionen in Form von Suspensionen gemischt und anschließend filtriert werden, der Filterkuchen danach verflüssigt und auf einem Düsenturmtrockner versprüht wird.

3. Verfahren zur Herstellung von inhomogenen Kieselsäuren nach Anspruch 1,
   **dadurch gekennzeichnet,**
   **dass** mindestens zwei Kieselsäurefraktionen in Form von Filterkuchen gemischt werden, danach verflüssigt und auf einem Düsenturmtrockner versprüht wird.

4. Verfahren zur Herstellung von inhomogenen Kieselsäuren nach Anspruch 1,
   **dadurch gekennzeichnet,**
   **dass** zumindest eine Kieselsäurefraktion in Form einer Suspensionen und zumindest eine Kieselsäurefraktion in Form eines Filterkuchens gemischt werden, anschließend wird filtriert, der Filterkuchen verflüssigt und auf einem Düsenturmtrockner versprüht.

5. Verfahren zur Herstellung von inhomogenen Kieselsäuren nach Anspruch 1,
   **dadurch gekennzeichnet,**
   **dass** zumindest eine Kieselsäurefraktion in Form einer Suspensionen und zumindest eine Kieselsäurefraktion als getrockneter Feststoff gemischt werden, anschließend wird filtriert, der Filterkuchen verflüssigt und auf einem Düsenturmtrockner versprüht.

6. Verfahren zur Herstellung von inhomogenen Kieselsäuren nach Anspruch 1,

**dadurch gekennzeichnet,**
**dass** mindestens zwei Kieselsäurefraktionen als getrocknete Feststoffe gemischt, resuspendiert und anschließend filtriert werden, der Filterkuchen wird danach verflüssigt und auf einem Düsenturmtrockner versprüht.

7. Verfahren nach einem der Ansprüche 1 bis 6,
   **dadurch gekennzeichnet,**
   **dass** der jeweilige Anteil einer Kieselsäurefraktion in der Kieselsäure zwischen 5 und 95 Gew.-% liegt.

8. Verfahren nach einem der Ansprüche 1 bis 7,
   **dadurch gekennzeichnet,**
   **dass** eine oder mehrere Kieselsäurefraktionen aus einer Fällungskieselsäure bestehen.

9. Verfahren nach einem der Ansprüche 1 bis 7,
   **dadurch gekennzeichnet,**
   **dass** eine oder mehrere Kieselsäurefraktionen aus einer pyrogenen Kieselsäure bestehen.

10. Inhomogene Kieselsäure erhältlich nach einem verfahren gemäß einem der Ansprüche 1 bis 9.

11. Inhomogene Kieselsäure nach Anspruch 10,
    **dadurch gekennzeichnet,**
    **dass** die Kieselsäure die folgenden physikalisch-chemischen Daten aufweist:

|  |  |
|---|---|
| BET-Oberfläche | 80 - 300 m$^2$/g |
| CTAB-Oberfläche | 80 - 300 m$^2$/g |
| DBP-Aufnahme | 150 - 350 g/100 g. |

12. Verwendung der inhomogene Kieselsäure nach einem der Ansprüche 10 oder 11 als Füllstoff in Elastomerenmischungen.

13. Verwendung nach Anspruch 12,
    **dadurch gekennzeichnet,**
    **dass** es sich bei der Elastomerenmischung um einen Reifen handelt.

14. Elastomerenmischung enthaltend eine inhomogene Kieselsäure nach einem der Ansprüche 10 oder 11.

15. Reifen enthaltend eine inhomogene Kieselsäure nach einem der Ansprüche 10 oder 11.


**Claims**

1. Process for preparing inhomogeneous silicas, **characterized in that** at least two silica fractions which differ by at least 10% in at least one value for BET surface area, CTAB surface area and DBP absorption are mixed, filtered, subjected to a liquefaction step and sprayed in a jet tower dryer, so that the resulting inhomogeneous silicas have a fines content of not more than 10% of particles with a particle diameter of less than or equal to 63 μm (Alpine sieve residue).

2. Process for preparing inhomogeneous silicas according to Claim 1, **characterized in that** at least two silica fractions in the form of suspensions are mixed and subsequently filtered, the filtercake is thereafter liquefied and sprayed in a jet tower dryer.

3. Process for preparing inhomogeneous silicas according to Claim 1, **characterized in that** at least two silica fractions in the form of filtercakes are mixed, thereafter liquefied and sprayed in a jet tower dryer.

4. Process for preparing inhomogeneous silicas according to Claim 1, **characterized in that** at least one silica fraction in the form of a suspension and at least one silica fraction in the form of a filtercake are mixed, the mixture is subsequently filtered and the filtercake is liquefied and sprayed in a jet tower dryer.

**5.** Process for preparing inhomogeneous silicas according to Claim 1, **characterized in that** at least one silica fraction in the form of a suspension and at least one silica fraction as a dried solid are mixed, the mixture is subsequently filtered, and the filtercake is liquefied and sprayed in a jet tower dryer.

**6.** Process for preparing inhomogeneous silicas according to Claim 1, **characterized in that** at least two silica fractions as dried solids are mixed, resuspended and subsequently filtered, and the filtercake is thereafter liquefied and sprayed in a jet tower dryer.

**7.** Process according to any of Claims 1 to 6, **characterized in that** the respective proportion of one silica fraction in the silica is between 5 and 95% by weight.

**8.** Process according to any of Claims 1 to 7, **characterized in that** one or more silica fractions consist of a precipitated silica.

**9.** Process according to any of Claims 1 to 7, **characterized in that** one or more silica fractions consist of a pyrogenic silica.

**10.** Inhomogeneous silica obtainable by a process according to any of Claims 1 to 9.

**11.** Inhomogeneous silica according to Claim 10, **characterized in that** the silica has the following physicochemical data:

| | |
|---|---|
| BET surface area | 80 - 300 $m^2$/g |
| CTAB surface area | 80 - 300 $m^2$/g |
| DBP absorption | 150 - 350 g/100 g. |

**12.** Use of the inhomogeneous silica according to either of Claims 10 and 11 as a filler in elastomer mixtures.

**13.** Use according to Claim 12, **characterized in that** the elastomer mixture is a tyre.

**14.** Elastomer mixture comprising an inhomogeneous silica according to either of Claims 10 and 11.

**15.** Tyre comprising an inhomogeneous silica according to either of Claims 10 and 11.

**Revendications**

**1.** Procédé pour la préparation de silices inhomogènes, **caractérisé en ce qu'**on mélange au moins deux fractions de silice, entre lesquelles au moins une valeur de mesure de la surface BET, de la surface CTAB et de l'absorption de DBP diffère d'au moins 10%, on filtre, on soumet à une étape de liquéfaction et on pulvérise dans une tour de séchage à pulvérisateurs, de manière telle que les silices inhomogènes obtenues présentent une proportion de fines d'au plus 10% de particules qui présentent un diamètre inférieur ou égal à 63 $\mu$m (résidu Alpine).

**2.** Procédé pour la préparation de silices inhomogènes selon la revendication 1, **caractérisé en ce qu'**on mélange au moins deux fractions de silice sous forme de suspensions, puis on filtre, le gâteau de filtre est ensuite liquéfié et pulvérisé dans une tour de séchage à pulvérisateurs.

**3.** Procédé pour la préparation de silices inhomogènes selon la revendication 1, **caractérisé en ce qu'**on mélange au moins deux fractions de silice sous forme de gâteaux de filtre, puis on liquéfie et pulvérise dans une tour de séchage à pulvérisateurs.

**4.** Procédé pour la préparation de silices inhomogènes selon la revendication 1, **caractérisé en ce qu'**on mélange au moins une fraction de silice sous forme d'une suspension et au moins une fraction de silice sous forme d'un gâteau de filtre, puis on filtre, on liquéfie le gâteau de filtre et on pulvérise dans une tour de séchage à pulvérisateurs.

**5.** Procédé pour la préparation de silices inhomogènes selon la revendication 1, **caractérisé en ce qu'**on mélange au moins une fraction de silice sous forme d'une suspension et au moins une fraction de silice sous forme de solide séché, puis on filtre, on liquéfie le gâteau de filtre et on pulvérise dans une tour de séchage à pulvérisateurs.

6. Procédé pour la préparation de silices inhomogènes selon la revendication 1, **caractérisé en ce qu'**on mélange au moins deux fractions de silice sous forme de solides séchés, on remet en suspension, puis on filtre, on liquéfie ensuite le gâteau de filtre et on pulvérise dans une tour de séchage à pulvérisateurs.

7. Procédé selon l'une quelconque des revendications 1 à 6, **caractérisé en ce que** chaque proportion d'une fraction de silice dans la silice se situe entre 5 et 95% en poids.

8. Procédé selon l'une quelconque des revendications 1 à 7, **caractérisé en ce qu'**une ou plusieurs fractions de silice sont constituées par une silice précipitée.

9. Procédé selon l'une quelconque des revendications 1 à 7, **caractérisé en ce qu'**une ou plusieurs fractions de silice sont constituées par une silice pyrogène.

10. Silice inhomogène, pouvant être obtenue selon un procédé selon l'une quelconque des revendications 1 à 9.

11. Silice inhomogène selon la revendication 10, **caractérisée en ce que** la silice présente les données physico-chimiques suivantes :

| | |
|---|---|
| Surface BET | 80-300 m$^2$/g |
| Surface CTAB | 80-300 m$^2$/g |
| Absorption de DBP | 150-350 g/100 g. |

12. Utilisation des silices inhomogènes selon l'une quelconque des revendications 10 ou 11 comme charge dans des mélanges d'élastomères.

13. Utilisation selon la revendication 12, **caractérisée en ce qu'**il s'agit, pour le mélange d'élastomères, d'un pneumatique.

14. Mélange d'élastomères contenant une silice inhomogène selon l'une quelconque des revendications 10 ou 11.

15. Pneumatique contenant une silice inhomogène selon l'une quelconque des revendications 10 ou 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0901986 A
- EP 0647591 A
- EP 018866 A
- EP 0272380 A
- EP 0268763 A
- EP 0942029 A
- EP 0937755 A
- EP 0643015 A
- US 4097771 A
- DE 4004781 C
- GB 1043282 A
- EP 0983966 A